# NEUE EUROPÄISCHE PATENTSCHRIFT

(11) **EP 2 509 404 B2**
(45) Veröffentlichungstag und Bekanntmachung des Hinweises auf die Entscheidung über den Einspruch: **19.07.2017**
(45) Hinweis auf die Patenterteilung: 12.03.2014
(21) Anmeldenummer: 10784815.2
(22) Anmeldetag: 03.12.2010
(51) Int. Cl.: A01D 90/12, A01B 69/08, A01F 15/08

(54) **KOMBINATION AUS EINEM ZUGFAHRZEUG UND EINEM GERÄT**
COMBINATION OF A TRACTOR AND AN IMPLEMENT
COMBINAISON D'UN TRACTEUR ET UN OUTIL

(30) Priorität: 07.12.2009 DE 102009047585
(43) Veröffentlichungstag der Anmeldung: 17.10.2012
(73) Patentinhaber: Deere & Company, Moline, IL 61265 (US)
(72) Erfinder: KORMANN, Georg, 66482 Zweibrücken (DE)
(74) Vertreter: Holst, Sönke
(86) Internationale Anmeldenummer: PCT/EP2010/068814
(87) Internationale Veröffentlichungsnummer: WO 2011/069902

(56) Entgegenhaltungen:
- EP-A- 1 336 549
- EP-A- 1 685 759
- EP-A2- 1 716 754
- FR-A- 2 881 019

## Beschreibung

Die Erfindung betrifft eine Kombination aus einem Zugfahrzeug und einem mittels einer Deichsel vom Zugfahrzeug gezogenen, durch Räder auf dem Erdboden abgestützten Gerät gemäß dem Oberbegriff des Anspruchs 1.

### Stand der Technik

In der Landwirtschaft liegen vielfach Anwendungsfälle vor, in denen gezogene Geräte hinter Zugfahrzeugen hergezogen werden und es beabsichtigt ist, die Geräte auf einem gewünschten Sollweg zu bewegen, um beispielsweise Erntegut von einem Feld aufzunehmen oder Materialien auf ein Feld auszubringen. In der Vergangenheit wurde dazu das Zugfahrzeug durch einen Fahrer gelenkt und das mittels einer Deichsel an einer Kupplung des Zugfahrzeugs angehängte Gerät folgte dem Zugfahrzeug, wobei der Sollweg des Geräts aufgrund unterschiedlicher Bewegungsbahnen des Zugfahrzeugs und des Geräts nicht immer exakt eingehalten werden konnte, weshalb vorgeschlagen wurde, die Räder des Geräts mittels eines Zylinders zu kontrollieren, der durch einen den Winkel zwischen der Deichsel und dem Zugfahrzeug erfassenden Geberzylinder kontrolliert wird (FR 2 881 019 A1).

Um bei einer Ballenpresse die über die Breite der Ballenbildungskammer gleichmäßige Erstellung eines Ballens zu vereinfachen, wurde in der US 4 433 533 A vorgeschlagen, durch über die Breite des Rundballens verteilte Sensoren die Größe des Ballens zu erfassen und abhängig von der jeweiligen Form des Ballens entweder durch einen Hydraulikzylinder die Ballenpresse in seitlicher Richtung gegenüber dem Zugfahrzeug zu bewegen oder die Räder der Ballenpresse um die Hochachse zu verschwenken. Auf diese Weise wird das Zugfahrzeug durch den Bediener entlang eines Schwads gefahren, während die Ballenpresse selbsttätig auf einer kurven- oder mäanderförmigen Bahn bewegt und ein zylindrischer Ballen erzeugt wird.

Weiterhin beschreibt die EP 1 634 491 A1 eine Ballenpresse mit über die Breite der Ballenbildungskammer verteilten Sensoren zur Erfassung der Ballengröße. Die Sensoren sind mit einer Steuerung verbunden, die eine automatische Lenkeinrichtung des Zugfahrzeugs in der Weise ansteuert, dass das Zugfahrzeug selbsttätig entlang des Schwads geführt wird und abhängig von der jeweiligen Form des Ballens mehr oder weniger weit seitlich neben dem Schwad fährt, um einen zylindrischen Ballen zu erzeugen.

Die EP 1 685 759 A1 beschreibt eine andere Ballenpresse, bei der das Zugfahrzeug selbsttätig entlang des Schwads geführt wird und über die Breite der Ballenbildungskammer verteilte Sensoren zur Erfassung der Ballengröße mit einer Steuerung verbunden sind, die die automatische Lenkeinrichtung des Zugfahrzeugs oder einen Aktor ansteuert, der die Deichsel der Ballenpresse seitlich verstellt, um über die Breite homogene Ballen zu erzeugen.

Die als gattungsbildend angesehene EP 1 336 549 A1 beschreibt eine gezogene landwirtschaftliche Maschine, deren Räder und Deichsel jeweils durch Aktoren aktiv lenkbar sind. Die Räder und Deichsel werden entsprechend den jeweiligen Einsatzverhältnissen getrennt angesteuert, jedoch dann gemeinsam betätigt, wenn ein möglichst enger Wendekreis erzielt werden soll.

Die EP 1 716 754 A2 schlägt einen Verband aus einem Zugfahrzeug und einer Verteilmaschine vor. Bei einer ersten Ausführungsform ist die Deichsel der Verteilmaschine als Lenkdeichsel ausgeführt und mit einem Geberzylinder verbunden, der hydraulisch mit einem Steuerzylinder gekoppelt ist, welcher das Verteilgestänge quer zur Vorwärtsrichtung orientiert. Bei einer anderen Ausführungsform sind die Räder der Verteilmaschine lenkbar und ein Sensor zur Erfassung des Lenkwinkels der Räder kontrolliert den das Verteilgestänge quer zur Vorwärtsrichtung orientierenden Steuerzylinder.

Die bekannten Ausführungsformen, bei denen das Zugfahrzeug gelenkt wird, um zu erreichen, dass das Gerät entlang des gewünschten Sollweges bewegt wird, haben den Nachteil, dass auch der Fahrer des Zugfahrzeugs den seitlichen Bewegungen ausgesetzt ist, was auf Dauer ermüdend und unbequem werden kann. Außerdem besteht beispielsweise bei einer Ballenpresse die Gefahr, dass die Räder des Zugfahrzeugs über den Schwad fahren und ihn in unerwünschter Weise verdichten und verunreinigen. Bei den Ausführungsformen, in denen das Gerät gegenüber dem Zugfahrzeug zwangsgelenkt wird, entstehen hingegen mitunter Betriebssituationen, bei denen ein Bearbeitungselement des Geräts, z. B. bei einer Ballenpresse oder einem Ladewagen ein Gutaufnehmer, nicht orthogonal zum Schwad ausgerichtet ist, d. h. gegenüber dem Schwad in seitlicher Richtung bewegt wird, was zu unerwünschten Verformungen und Abnutzungserscheinungen der Zinken des Gutaufnehmers führen kann.

### Aufgabe der Erfindung

Die der Erfindung zu Grunde liegende Aufgabe wird darin gesehen, eine Kombination aus einem Zugfahrzeug und einem gezogenen Gerät bereitzustellen, bei dem eine seitliche Bewegung des Bearbeitungselements des Geräts gegenüber einer Solllinie nicht oder in vermindertem Umfang zu erwarten ist.

### Lötung

Diese Aufgabe wird erfindungsgemäß durch die Lehre des Patentanspruches 1 gelöst, wobei in dem weiteren Patentanspruch Merkmale aufgeführt sind, die die Lösung in vorteilhafter Weise weitereniwickeln.

Eine Kombination setzt sich aus einem Zugfahrzeug und einem vom Zugfahrzeug gezogenen Gerät zusammen. Das Gerät wird durch eine Deichsel vom Zugfahrzeug gezogen, ist durch Räder auf dem Erdboden abgestützt und umfasst ein mit einem Feld zusammenwirkendes Bearbeitungselement, beispielsweise einen Gutaufnehmer oder ein Sprühgestänge. Weiterhin ist eine Steuerungseinrichtung vorhanden, die sich an Bord des Zugfahrzeugs oder des Geräts befinden oder räumlich über beide verteilt sein kann, Die Steuereinrichtung ist mit einem ersten Aktor verbunden, der zur Verstellung des Winkels zwischen der Deichsel und dem Gerät dient. Der erste Aktor kann (zur direkten Verstellung der Deichsel gegenüber dem Gerät) zwischen der Deichsel und einem Fahrgestell des Geräts oder (zur indirekten Verstellung der Deichsel gegenüber dem Gerät) zwischen dem Zugfahrzeug und der Deichsel angeordnet sein. Außerdem ist die Steuereinrichtung mit einem zweiten Aktor gekoppelt, der zur Lenkung der Räder dient, d. h. zur Verstellung ihres Winkels um die Hochachse. Im Betrieb steuert die Steuereinrichtung die beiden Aktoren in einer Weise an, dass die Längsachse des Bearbeitungselements stets zumindest näherungsweise orthogonal zu einer Solllinie orientiert ist.

Auf diese Weise erreicht man, dass das Bearbeitungselement stets quer zur Solllinie orientiert ist, was bei einem mit einem Schwad zusammenwirkenden Bearbeitungselement den Verschleiß vermindert.

Das Gerät ist ein Sammelfahrzeug für Erntegut, beispielsweise eine Ballenpresse für rechteckige oder runde Ballen oder ein Ladewagen. Als Bearbeitungselement ist ein Gutaufnehmer vorgesehen, der zum Aufnehmen eines Schwads vom Erdboden dient. Das Sammelfahrzeug umfasst weiterhin einen Behälter zur Aufnahme des aufgenommenen Erntegutes insbesondere in Form einer Presskammer oder eines Ladebehälters. Um eine gleichmäßige Verteilung des Ernteguts im Behälter und somit gleichförmige Ballen zu erhalten, sind über die Breite des Behälters Sensoren verteilt, die die seitliche Verteilung des Ernteguts erfassen. Die Sensoren sind mit der Steuereinrichtung verbunden. Die Signale der Sensoren dienen der Steuereinrichtung (neben der Orientierung des Bearbeitungselements quer zur Solllinie, die bei dieser Ausführungsform der Längsachse des Schwads entspricht) als zweiter Parameter zur Ansteuerung der Aktoren. Der Behälter wird demnach nach einer Befüllstrategie aufgefüllt.

Die Steuereinrichtung kann durch eine Positionsbestimmungseinrichtung und/oder eine Erfassungseinrichtung mit einer Information hinsichtlich der Lage der Solllinie beaufschlagt werden.

Das Zugfahrzeug kann durch einen Bediener oder basierend auf Signalen einer (insbesondere der zuvor erwähnten) Positionsbestimmungseinrichtung und/oder Erfassungseinrichtung entlang der Solllinie geführt werden.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht eines Zugfahrzeugs mit einem gezogenen Gerät,

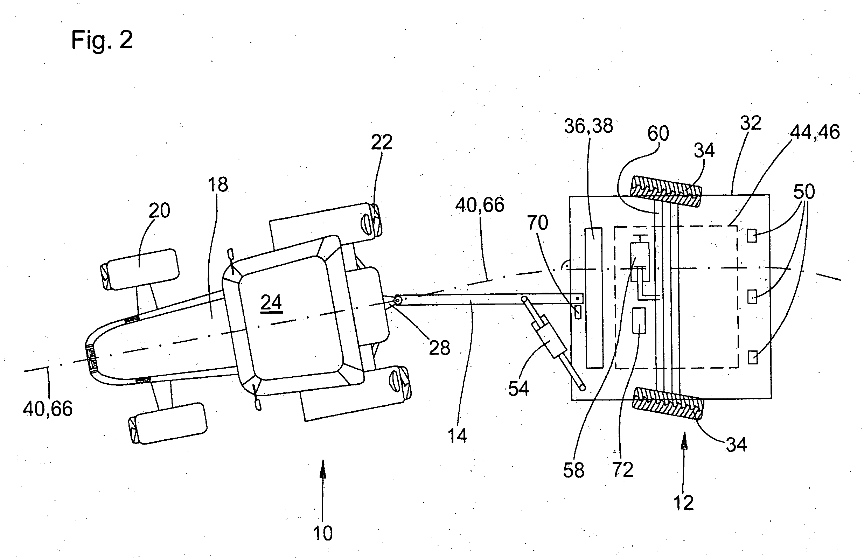

- Fig. 2: eine Draufsicht auf das Zugfahrzeug und das Gerät, und
- Fig. 3: ein Flussdiagramm, nach dem die Steuereinrichtung des Geräts arbeitet.

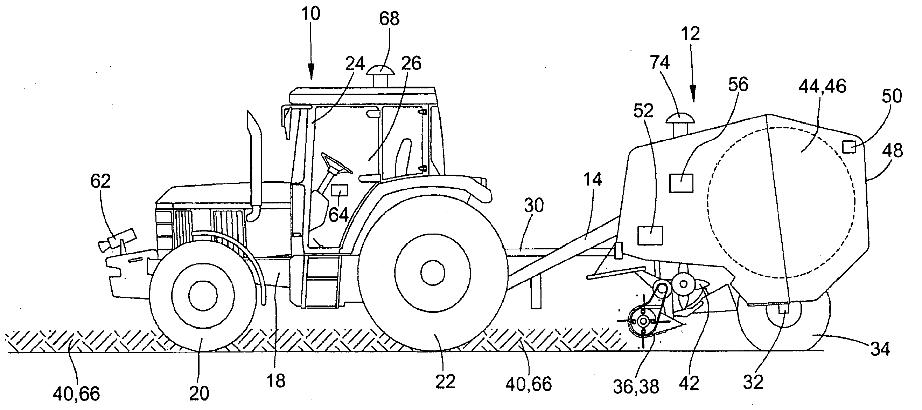

Die Figur 1 zeigt eine seitliche Ansicht eines landwirtschaftlichen Zugfahrzeugs 10 in Form eines Traktors und eines mittels einer Deichsel 14 an eine Anhängekupplung 28 des Zugfahrzeugs 10 gekoppelten Geräts 12 in Form einer Rundballenpresse variabler Presskammergröße. Das Zugfahrzeug 10 baut sich auf einem tragenden Rahmen 18 auf, der sich auf lenkbaren Vorderrädern 20 und antreibbaren Hinterrädern 22 abstützt und eine Kabine 24 trägt, in der sich ein Bedienerarbeitsplatz 26 befindet.

Das Gerät 12 umfasst ein Fahrgestell 32, das sich über lenkbare Räder 34 auf dem Erdboden abstützt, ein Bearbeitungselement 36 in Form eines Gutaufnehmers 38 zur Aufnahme von in einem Schwad 40 auf dem Erdboden liegenden Ernteguts und einen Förderer 42, der das vom Gutaufnehmer 38 aufgenommene Erntegut in einen Behälter 46 in Form eines Ballenpressraums 44 fördert. Der Ballenpressraum 44 wird in an sich bekannter Weise durch Pressmittel (nicht gezeigt) in Form von Riemen begrenzt. Ein fertig gestellter Ballen kann durch eine nach oben schwenkbare Rücktür 48 ausgeworfen und auf dem Feld abgelegt werden. Der mechanische Antrieb der angetriebenen Elemente des Geräts 12 folgt über eine Zapfwelle 30 vom Zugfahrzeug 10 her, obwohl auch ein Antrieb durch Elektromotore denkbar wäre, die vom Zugfahrzeug 10 her mit elektrischer Energie versorgt werden.

Über die Breite des Behälters 46 sind insgesamt drei Sensoren 50 verteilt, die zur Erfassung des Durchmessers des Ballens und/oder zur Erfassung der Spannung der Pressmittel dienen, die ebenfalls Informationen über die Verteilung des Ernteguts über die Breite des Behälters 46 enthält. Die Sensoren 50 sind mit einer Steuereinrichtung 52 verbunden, die sich an Bord des Geräts 12 befindet, aber auch an Bord des Zugfahrzeugs 10 lokalisiert sein könnte. Die Steuereinrichtung 52 ist über eine Ventilanordnung 56 mit einem ersten Aktor 54 in Form eines Hydraulikzylinders verbunden, der einen Endes an der Deichsel 14 und anderen Endes am Fahrgestell 32 angelenkt ist. Die Steuereinrichtung 52 ist über die Ventilanordnung 56 außerdem mit einem zweiten Aktor 58 in Form eines Hydraulikzylinders verbunden, der mit einer Stange 60 zur Verschwenkung der Räder 34 des Geräts 12 um die Hochachse gekoppelt ist. Durch Rückkopplungssensoren 70, 72 wird die Steuereinrichtung 52 über die aktuellen Winkel der Deichsel 14 und der Räder 34 informiert.

An der Vorderseite des Zugfahrzeugs 10 ist eine Erfassungseinrichtung 62 in Form einer Kamera angebracht, die das Schwad 40 optisch erfasst und mit einem Bildverarbeitungssystem verbunden ist, das ein Lenksignal an eine Lenksteuerung 64 des Zugfahrzeugs abgibt, die wiederum die lenkbaren Vorderräder 20 des Zugfahrzeugs über einen geeigneten Aktor (nicht gezeigt) in einer Weise verstellt, dass die Längsmittelachse des Zugfahrzeugs 10 zumindest näherungsweise auf einer Solllinie 66 geführt wird, die der Längsachse des Schwads 40 entspricht. Bei einer anderen Ausführungsform sind Daten hinsichtlich der Position des Schwads in der Lenksteuerung 64 abgespeichert und eine Positionsbestimmungseinrichtung 68 (beispielsweise in Form einer GPS-Antenne) übersendet der Lenksteuerung 64 aktuelle Positionsinformationen, die gemeinsam mit den abgespeicherten Daten hinsichtlich der Position des Schwads von der Lenksteuerung 64 zur Ansteuerung des Aktors für die lenkbaren Vorderräder 20 dienen. Beide in diesem Absatz erwähnten Varianten können auch kombiniert werden (vgl. EP 1 266 553 A2). Die Lenksteuerung 64 übersendet der Steuereinrichtung 52 fortlaufend Daten hinsichtlich der seitlichen Position der Solllinie 66 gegenüber der Längsmittelachse des Zugfahrzeugs 10 und des zugehörigen Zeitpunkts der Erfassung und/oder der zugehörigen Position in Vorwärtsrichtung und ist dazu mit der Steuereinrichtung 52 über einen Bus verbunden.

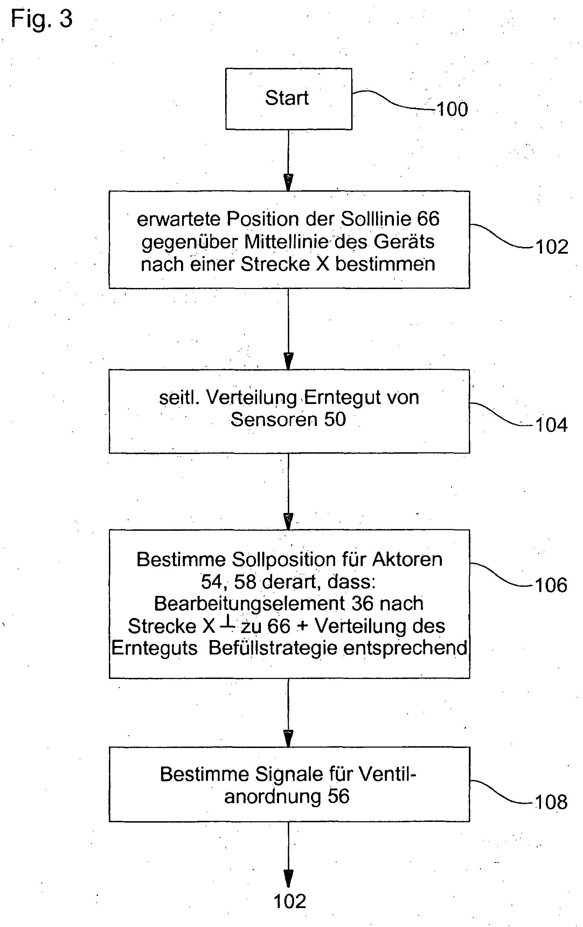

Nach alledem ergibt sich die in der Figur 3 dargestellte Arbeitsweise der Steuereinrichtung 52. Nach dem Start im Schritt 100 folgt der Schritt 102, in dem die nach Zurücklegen einer Strecke der Länge x (von z. B. 1 m) zu erwartende Position der Solllinie 66 gegenüber der Mittellinie des Geräts 12 am Bearbeitungselement 36 bestimmt wird. Es wird somit der zu erwartende seitliche Versatz des Schwads 40 gegenüber der Längsmittelebene des Geräts 12 an einer um die Strecke x vor dem Gerät 12 liegenden Stelle bestimmt. Diese Position kann anhand der Signale von der Lenksteuerung 64 und der bis zum Erreichen der zurückgelegten Zeit bzw. der vom Gerät 12 (zwischen der Erfassung durch die Erfassungseinrichtung 62 und dem Erreichen der Stelle) zurückgelegten Strecke bestimmt werden. Die seitliche Bewegung des Geräts kann aus den Signalen der Rücckopplungssensoren 70, 72 und/oder eines weiteren, zwischen der Deichsel 14 und der Kupplung 28 angeordneten Rückkopplungssensors (nicht gezeigt) abgeleitet werden, und/oder dem Gerät 12 wird eine eigene Positionsbestimmungseinrichtung 74 zugeordnet, oder es wird dafür ein kinematisches Modell (vgl. WO 2008/005195 A2) für die Kombination aus Zugfahrzeug 10 und Gerät 12 verwendet.

Im folgenden Schritt 104 wird die seitliche Verteilung des Ernteguts im Behälter 46 durch die Sensoren 50 erfasst. Es folgt dann der Schritt 106, in dem Sollpositionen für die Aktoren 54 und 58 errechnet werden. Diese werden derart bestimmt, dass einerseits das Bearbeitungselement 36 auch nach dem Zurücklegen der Strecke x noch orthogonal zur Solllinie 66 ist, andererseits aber die Verteilung des Ernteguts im Behälter der Befüllstrategie entspricht, die beispielsweise beinhalten kann, dass zunächst die linke Hälfte des Ballens bis zu einem Durchmesser von 10% der gewünschten Ballengröße aufgebaut wird, dann die rechte Hälfte bis zu einem Durchmesser von 20 % der gewünschten Ballengröße aufgebaut wird, dann wieder die linke Hälfte des Ballens bis zu einem Durchmesser von 30 % aufgebaut wird, etc. Hierzu sei ergänzend auf den Stand der Technik nach EP 1 634 491 A1 und EP 1 813 146 A2 verwiesen, deren Offenbarungen durch Verweis mit in die vorliegenden Unterlagen aufgenommen werden.

Im Schritt 106 werden dann Signale für die Ventilanordnung 56 bestimmt und übersendet, die auf dem Ergebnis des Schritts 104 und den Ausgangswerten der Sensoren 70, 72 hinsichtlich der aktuellen Positionen der Aktoren 54 und 58 beruhen. Es folgt wieder der Schritt 102.

Es ist noch anzumerken, dass noch weitere Verfeinerungen möglich wären. So könnte das Zugfahrzeug 10 und/oder das Gerät 12 mit einem Neigungssensor (nicht gezeigt) zur Erfassung der Seitenneigung des Erdbodens ausgestattet werden, dessen Signale der Steuereinrichtung 52 zugeführt werden. Die Steuereinrichtung 52 kann dann das Gerät 12 hangaufwärts lenken, um den Schlupf auszugleichen. Die Signale des Neigungssensors können auch verwendet werden, um das Gerät 12 vor dem Auswerfen eines Ballens selbsttätig parallel zum Hang zu stellen und so zu verhindern, dass er den Hang hinunterrollt.

## Patentansprüche

1. Kombination aus einem Zugfahrzeug (10) und einem mittels einer Deichsel (14) vom Zugfahrzeug (10) gezogenen, durch Räder (34) auf dem Erdboden abgestützten Gerät (12), welches ein mit einem Feld zusammenwirkendes Bearbeitungselement (36) umfasst, mit einer Steuerungseinrichtung (52), die mit einem Aktor (54, 58) verbunden ist, mit dem das Gerät (12) gegenüber dem Zugfahrzeug (10) in seitlicher Richtung lenkbar ist, wobei die Steuereinrichtung (52) mit einem ersten Aktor (54), der zur Verstellung des Winkels zwischen der Deichsel (14) und dem Gerät (12) eingerichtet ist, und mit einem zweiten Aktor (58) verbunden ist, der zur Verstellung des Winkels der Räder (34) des Geräts (12) um die Hochachse eingerichtet ist, **dadurch gekennzeichnet, dass** die Steuereinrichtung (52) betreibbar ist, die beiden Aktoren (54, 58) in einer Weise anzusteuern, dass die Längsachse des Bearbeitungselements (36) stets zumindest näherungsweise orthogonal zu einer Solllinie (66) orientiert ist, dass das Gerät (12) ein Sammelfahrzeug für Erntegut ist, das als Bearbeitungselement (36) einen Gutaufnehmer (38) zur Aufnahme von Erntegut aus einem Schwad (44), einen Behälter (46) zur Aufnahme des aufgenommenen Ernteguts und Sensoren (50) zur Erfassung der seitlichen Verteilung des Ernteguts im Behälter (46) umfasst, wobei die Steuereinrichtung (52) mit den Sensoren (50) verbunden und betreibbar ist, die beiden Aktoren (54, 58) in einer Weise anzusteuern, dass der Behälter (46) gemäß einer Befüllstrategie aufgefüllt wird und die Solllinie (66) der Längsachse des Schwads (40) entspricht.

2. Kombination nach Anspruch 1, **dadurch gekennzeichnet, dass** die Steuereinrichtung (52) durch eine Positionsbestimmungseinrichtung (68) und/oder eine Erfassungseinrichtung (62) mit einer Information hinsichtlich der Lage der Solllinie (66) beaufschlagbar ist.

3. Kombination nach Anspruch 2, **dadurch gekennzeichnet, dass** die Steuereinrichtung (52) betreibbar ist, den zeitlichen und/oder örtlichen Versatz der Erfassung der Lage des Solllinie (66) und des Erreichens der jeweiligen Stelle durch das Bearbeitungselement (36) anhand von Signalen von Rückkopplungssensoren (70, 72) zur Erfassung der Position der Deichsel (14) und der Räder (34) und/oder von Signalen einer dem Zugfahrzeug (10) zugeordneten Positionsbestimmungseinrichtung (68) und/oder von Signalen einer dem Gerät (12) zugeordneten Positionsbestimmungseinrichtung (74) und/oder anhand eines kinematischen Modells der Kombination aus Zugfahrzeug (10) und Gerät (12) auszugleichen.

4. Kombination nach einem der Ansprüche 1 bis 3, **dadurch gekennzeichnet, dass** das Zugfahrzeug (10) manuell oder selbsttätig entlang der Solllinie (66) lenkbar ist.

5. Kombination nach Anspruch 5, **dadurch gekennzeichnet, dass** das Zugfahrzeug (10) mit einer Lenksteuerung (64) ausgestattet ist, die mit der Steuereinrichtung (52) und der Positionsbestimmungseinrichtung (68) und/oder der Erfassungseinrichtung (62) zur Erfassung der Lage der Solllinie (66) verbunden ist.

## Claims

1. Combination of a tractor (10) and an implement (12) which is pulled by the tractor (10) by means of a drawbar (14), is supported on the ground by wheels (34) and comprises a processing element (36) which interacts with a field, having a control device (52) which is connected to an actuator (54, 58) with which the implement (12) can be steered in a lateral direction with respect to the tractor (10), wherein the control device (52) is connected to a first actuator (54), which is configured to adjust the angle between the drawbar (14) and the implement (12), and to a second actuator (58) which is configured to adjust the angle of the wheels (34) of the implement (12) about the vertical axis, **characterized in that** the control device (52) can be operated to actuate the two actuators (54, 58) in such a way that the longitudinal axis of the processing element (36) is always oriented at least approximately orthogonally with respect to a reference line (66), that the implement (12) is a collecting vehicle for harvested crop which comprises, as a processing element (36), a material picking-up means (38) for picking up harvested crop from a swath (44), a container (46) for holding the picked-up harvested crop and sensors (50) for detecting the lateral distribution of the harvested crop in the container (46), wherein the control device (52) is connected to the sensors (50) and can be operated to actuate the two actuators (54, 58) in such a way that the container (46) is filled according to a filling strategy and the reference line (66) corresponds to the longitudinal axis of the swath (40).

2. Combination according to Claim 1, **characterized in that** information relating to the position of the reference line (66) can be fed to the control device (52) via a position-determining device (68) and/or a detection device (62).

3. Combination according to Claim 2, **characterized in that** the control device (52) can be operated to compensate the chronological and/or spatial offset of the detection of the position of the reference line (66) and of the reaching of the respective location by the processing element (36) by means of signals of feedback sensors (70, 72) for detecting the position of the drawbar (14) and of the wheels (34) and/or of signals of a position-determining device (68) assigned to the tractor (10) and/or of signals of a position-determining device (74) assigned to the implement (12) and/or by means of a kinematic model of the combination of the tractor (10) and implement (12).

4. Combination according to one of Claims 1 to 3, **characterized in that** the tractor (10) can be steered along the reference line (66) manually or automatically.

5. Combination according to Claim 5, **characterized in that** the tractor (10) is equipped with a steering controller (64) which is connected to the control device (52) and to the position-determining device (68) and/or to the detection device (62) for detecting the position of the reference line (66).

## Revendications

1. Combinaison d'un véhicule tracteur (10) et d'un appareil (12) tiré par le véhicule tracteur (10) au moyen d'un timon (14), s'appuyant sur le sol par des roues (34) et comportant un élément de traitement (36) qui coopère avec un champ, un dispositif de commande (52) raccordé à un actionneur (54, 58) par lequel l'appareil (12) peut être dévié dans la direction latérale par rapport au véhicule tracteur (10), le dispositif de commande (52) étant raccordé à un premier actionneur (54) conçu pour ajuster l'angle entre le timon (14) et l'appareil (12) et à un deuxième actionneur (58) conçu pour ajuster l'angle des roues (34) de l'appareil (12) autour de l'axe supérieur, **caractérisée en ce que** le dispositif de commande (52) peut être amené à commander les deux actionneurs (54, 58) de telle sorte que l'axe longitudinal de l'élément de traitement (36) soit toujours orienté au moins approximativement à la perpendiculaire d'une ligne de consigne (66), **en ce que** l'appareil (12) est un véhicule de collecte de récolte qui comporte comme élément de traitement (36) un dispositif (38) de reprise de produit qui prélève le produit de la récolte dans un andain (44), un récipient (46) de reprise du produit de récolte qui a été prélevé et des capteurs (50) qui détectent la répartition latérale du produit de la récolte dans le récipient (46), où le dispositif de commande (52) étant raccordé à des capteurs (50) et pouvant être amené à commander les deux actionneurs (54, 58) de telle sorte que le récipient (46) soit rempli selon une stratégie de remplissage et que la ligne de consigne (66) corresponde à l'axe longitudinal de l'andain (40).

2. Combinaison selon la revendication 1, **caractérisée en ce qu'**une information concernant la position de la ligne de consigne (66) peut être apportée au dispositif de commande (52) par un dispositif (68) de détermination de position et/ou par un dispositif de saisie (62).

3. Combinaison selon la revendication 2, **caractérisée en ce que** le dispositif de commande (52) peut être amené à compenser le décalage latéral et/ou local de la saisie de la position de la ligne de consigne (66) et de l'atteinte d'un emplacement donné par l'élément de traitement (36) à l'aide de signaux de capteur de rétroaction (70, 72) qui saisissent la position du timon (14) et des roues (34), de signaux d'un dispositif (68) de détermination de position associé au véhicule tracteur (10), de signaux d'un dispositif (74) de détermination de position associé à l'appareil (12) et/ou à l'aide d'un modèle cinématique de la combinaison constituée du véhicule tracteur (10) et de l'appareil (12).

4. Combinaison selon l'une des revendications 1 à 3, **caractérisée en ce que** le véhicule tracteur (10) peut être guidé manuellement ou de manière autonome le long de la ligne de consigne (66).

5. Combinaison selon la revendication 5, **caractérisée en ce que** le véhicule tracteur (10) est équipé d'une commande de braquage (64) qui est raccordée au dispositif de commande (52) et au dispositif (68) de détermination de position et/ou au dispositif de saisie (62) pour saisir la position de la ligne de consigne (66).
